(19) Europäisches Patentamt

European Patent Office

Office européen des brevets

(11) **EP 1 348 624 B1**

(12) **FASCICULE DE BREVET EUROPEEN**

(45) Date de publication et mention
de la délivrance du brevet:
**29.12.2004 Bulletin 2004/53**

(51) Int Cl.⁷: **B64C 27/605**, B64C 27/41,
B64C 29/00, B64C 27/28

(21) Numéro de dépôt: **03290738.8**

(22) Date de dépôt: **24.03.2003**

(54) **Dispositif de commande du pas des pales d'un rotor d'aéronef convertible**

Blattwinkelverstellsteuerungsvorrichtung für den Rotor eines Verwandlungsflugzeuges

Blade pitch control device for the rotor of a convertible aircraft

(84) Etats contractants désignés:
**GB IT**

(30) Priorité: **29.03.2002 FR 0204006**

(43) Date de publication de la demande:
**01.10.2003 Bulletin 2003/40**

(73) Titulaire: **EUROCOPTER**
**13725 Marignane Cédex (FR)**

(72) Inventeurs:
• **Zoppitelli, Elio**
**13880 Velaux (FR)**

• **Rampal, Etienne**
**13004 Marseille (FR)**
• **Cornille, Eric**
**13300 Salon (FR)**

(74) Mandataire: **Renaud-Goud, Thierry et al**
**GPI & Associés**
**EuroParc de Pichaury**
**Bât D1-1 étage**
**1330, rue Guillibert de la Lauzière**
**13856 Aix-en-Provence Cédex 3 (FR)**

(56) Documents cités:
**FR-A- 1 565 217         US-A- 2 971 584**

**Description**

L'invention concerne un rotor d'un aéronef convertible, du type connu supportant au moins deux ailes, généralement fixes, et à au moins un rotor basculant.

Une application particulièrement avantageuse du rotor selon l'invention consiste en l'équipement de rotors basculants à entraînement homocinétique pour aéronefs convertibles notamment du type connu et décrit dans FR 1 565 217, FR 2 791 319, FR 2 791 634 et FR 2 798 359, auxquels on se reportera avantageusement pour davantage de précisions à ce sujet.

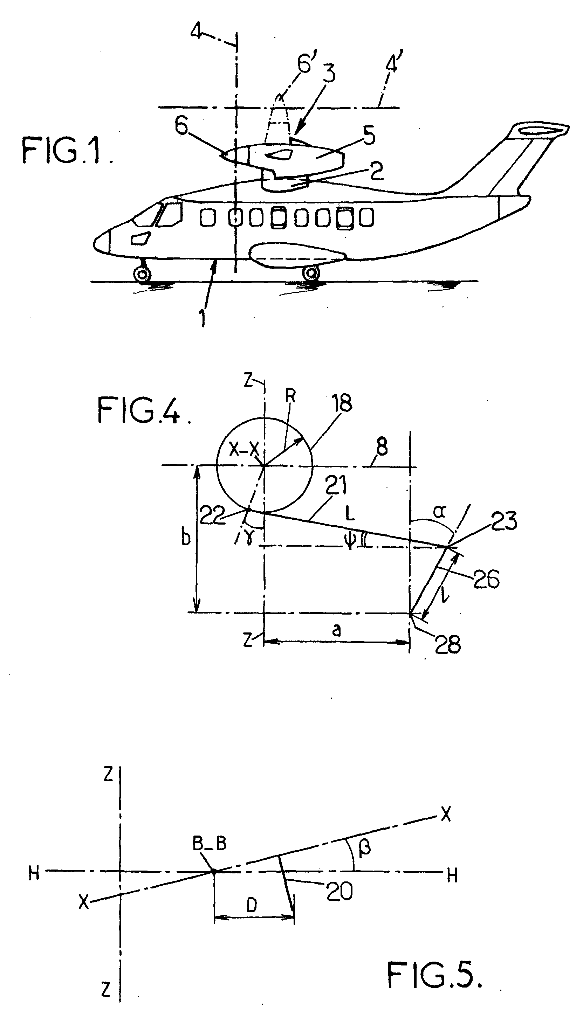

On se contente de rappeler qu'un tel aéronef convertible à rotors basculants comprend généralement, comme représenté schématiquement sur la figure 1, un fuselage 1, du type fuselage d'avion, supportant deux ailes fixes 2, par exemple des ailes hautes et surélevées par rapport au fuselage 1, chaque aile 2 supportant elle-même une nacelle motrice 3, logeant un groupe moteur entraînant en rotation un rotor 4, schématisé par le plan de rotation des pales du rotor, par l'intermédiaire d'une transmission (non visible sur la figure 1), dont un ensemble réducteur arrière est directement entraîné par le groupe moteur et logé comme ce dernier dans la partie arrière fixe 5 de la nacelle motrice 3, dont la partie avant 6, logeant le mât rotor et le moyeu, ainsi qu'un ensemble réducteur avant entraînant le mât rotor en rotation, est monté basculante avec le rotor 4, de sorte à pouvoir basculer d'une configuration avion, dans laquelle le rotor 4 se comporte comme une hélice à l'avant d'un fuseau moteur 5-6 dans le lit du vent relatif, à une configuration hélicoptère, dans laquelle le rotor 4' se comporte comme un rotor principal sustentateur d'hélicoptère à l'extrémité supérieure de la partie avant basculante de nacelle en position érigée 6' au-dessus de l'aile correspondante 2, cette dernière configuration étant utilisée pour les décollages et atterrissages de l'aéronef convertible, qui, après transition de la configuration hélicoptère vers la configuration avion, peut se déplacer en vol d'avancement comme un avion. En variante, les nacelles 3 peuvent être totalement basculantes avec les rotors 4 par rapport aux ailes fixes 2.

Les rotors basculants d'aéronefs convertibles se différencient des rotors, en particulier principaux, d'hélicoptères par les caractéristiques suivantes. Leur plage de commande en pas collectif des pales est très importante, du fait que l'aéronef doit pouvoir évoluer non seulement comme un hélicoptère mais aussi comme un avion, leur puissance de commande doit rester faible, ce qui impose une excentricité de battement (c'est-à-dire la distance entre l'axe de battement des pales et l'axe de rotation du rotor) très faible, les rotors, et en particulier leur moyeu, doivent présenter une grande rigidité dans le plan du rotor, afin de procurer un mode de traînée élevé, pour s'affranchir des risques de résonance-sol, et leur battement cyclique est important.

Pour satisfaire à ces différentes exigences, il a déjà été proposé d'équiper de tels aéronefs convertibles de rotors basculants d'un type dit « gimbal », à excentricité de battement nulle, sur lesquels le moyeu est entraîné en rotation par le mât et relié à ce dernier par des moyens de basculement, permettant un basculement d'ensemble du moyeu, et donc du rotor, autour d'un axe de battement passant par l'axe du mât et perpendiculaire à ce dernier, et pouvant occuper toute position en azimut autour de l'axe du mât. Sur de tels rotors, l'exigence impérative d'avoir un couplage pas-battement, appelé liaison K (ou liaison $\delta$ 3 dans les pays anglo-saxons) ayant une valeur légèrement négative pour la commande d'un tel rotor basculant, a conduit les concepteurs de tels rotors à adopter des rotors tripales, de manière à pouvoir conserver un dispositif de commande de pas conventionnel, analogue à ceux dont sont équipés les rotors principaux d'hélicoptères, avec un mécanisme à plateaux cycliques, dont les oscillations d'un plateau tournant commandent les déplacements, sensiblement selon l'axe de rotation du mât rotor, de bielles de commande de pas, dont chacune est articulée sur l'extrémité d'un levier de pas solidaire en rotation du pied d'une pale correspondante autour de l'axe longitudinal de changement de pas de cette pale, le levier de pas étant en saillie du côté du bord d'attaque ou du côté du bord de fuite de cette pale, afin que la distance entre l'axe de battement et le centre de l'articulation du levier de pas à la bielle de commande de pas correspondante soit faible.

Concrètement, cette condition de distance faible entre l'axe de battement et le centre de l'articulation du levier de pas à la bielle de commande de pas peut être respectée sur un rotor tripale avec des leviers de pas conventionnels, c'est-à-dire placés sensiblement dans le plan du disque rotor, car l'espace disponible entre les pieds des pales successives est généralement suffisant pour loger de tels leviers de pas.

Par contre, sur un rotor équipé d'au moins quatre pales, l'axe de battement d'une pale correspond sensiblement à l'axe longitudinal de la pale suivante, ce qui interdit pour raison d'interférence géométrique de placer les leviers de pas satisfaisant les conditions précédentes.

Le problème à la base de la présente invention est de proposer un dispositif de commande de pas des pales d'un rotor du type dit « gimbal » tel que défini ci-dessus, de préférence rigide dans son plan, et pouvant comporter au moins trois pales, mais de préférence quatre pales ou plus, tout en satisfaisant à l'exigence sévère d'une liaison K faiblement négative.

A cet effet, le dispositif de commande du pas des pales d'un rotor basculant d'aéronef convertible, pour un rotor comportant :

- un mât rotor, destiné à être entraîné en rotation par sa base autour de son axe longitudinal,

**EP 1 348 624 B1**

- un moyeu, entraîné en rotation par le mât, et relié à ce dernier par des moyens de basculement, permettant un basculement d'ensemble du moyeu autour de tout axe de battement passant par l'axe du mât et perpendiculaire à ce dernier, et
- au moins deux pales, dont chacune est reliée au moyeu par des moyens de retenue et d'articulation de ladite pale en pas autour de son axe longitudinal de changement de pas, qui s'étend dans un plan de rotation du rotor,

est un dispositif de commande de pas qui est externe au moyeu et, selon l'invention, se caractérise en ce qu'il comprend, pour chaque pale du rotor :

- un levier de pas, solidaire en rotation du pied de ladite pale autour dudit axe de changement de pas, et en saillie du côté du plan de rotation du rotor qui est dirigé vers la base du mât,
- une bielle de commande de pas, déplaçable dans une direction sensiblement parallèle à l'axe de rotation du mât,
- un renvoi, monté pivotant, autour d'un axe de pivot sensiblement contenu dans un plan radial par rapport à l'axe de rotation du mât, sur un point fixe d'un entraîneur, solidaire en rotation du mât, ladite bielle de commande de pas étant articulée sur ledit renvoi, au moins à pivotement autour d'un axe sensiblement parallèle à l'axe de pivot du renvoi sur l'entraîneur, et en un point décalé radialement vers l'extérieur dudit axe de pivot par rapport à l'axe de rotation du mât, et
- une bielle de liaison, articulée au moins à pivotement par une extrémité sur ledit levier de pas, autour d'un axe sensiblement parallèle audit axe de changement de pas, et, par son autre extrémité, sur le renvoi, en un point fixe de ce dernier situé entre ledit plan de rotation du rotor et le point d'articulation du renvoi sur l'entraîneur, de sorte que ladite bielle de liaison est faiblement inclinée sur tout plan radial par rapport à l'axe de rotation du mât, et que le renvoi convertit tout déplacement de ladite bielle de commande de pas en déplacement de ladite bielle de liaison dans une direction sensiblement transversale à la direction de l'axe du mât.

Un avantage essentiel de ce dispositif de commande de pas est que l'inclinaison de ladite bielle de liaison sur tout plan radial (perpendiculaire à l'axe du mât) peut être choisie pour correspondre à une liaison pas-battement (liaison K) souhaitée pour la pale correspondante.

Avantageusement de plus, ladite bielle de liaison reste sensiblement parallèle à ou faiblement inclinée sur tout plan radial par rapport à l'axe de rotation du mât, lorsque ladite pale effectue des débattements angulaires dans sa plage de pas.

En outre, l'angle d'inclinaison de ladite bielle de liaison sur tout plan radial, perpendiculaire à l'axe du mât, peut varier de sorte à procurer un couplage pas-battement (liaison K) selon une loi déterminée en fonction de l'angle de pas de la pale, lorsque cette dernière effectue des débattements angulaires en battement.

Dans une forme de réalisation de structure avantageusement simple, le renvoi est sensiblement en forme de L, articulé par son coude sur la bielle de commande de pas, par l'extrémité de l'un de ses bras sur l'entraîneur, et par l'extrémité de son autre bras sur la bielle de liaison. L'encombrement du renvoi est ainsi limité, tout en permettant un bon positionnement des articulations de la bielle de commande de pas et de la bielle de liaison sur le renvoi, et de ce dernier sur l'entraîneur, de sorte à procurer la faible inclinaison souhaitée de la bielle de liaison sur le plan radial, et donc la liaison K souhaitée.

La bielle de liaison peut ainsi, pour différentes valeurs du battement, et en fonction du pas de la pale correspondante, présenter une évolution de son inclinaison par rapport à tout plan radial par rapport à l'axe du mât qui fait que cette inclinaison, dont la pente relativement au plan radial (par rapport à l'axe du mât) influe sur la liaison K obtenue, demeure dans une plage de valeur angulaire limitée, inférieure à 20°, pour une plage de pas s'étendant sensiblement de -10° à 60°, et des valeurs de battement variant de -11° à +11°.

Cette faible inclinaison de la bielle de liaison sur tout plan radial par rapport à l'axe du mât, et dans une direction sensiblement transversale par rapport à la direction de l'axe du mât, est également favorable sur le plan de l'encombrement, ainsi que sur celui de la mise au point, car le changement, aisé à réaliser, des positions du renvoi et de la bielle de liaison, et en particulier de leurs articulations l'un sur l'autre, ainsi que sur le levier de pas pour la bielle de liaison, et sur la bielle de commande de pas et l'entraîneur, pour le renvoi, permet de tester facilement différentes configurations de liaison pas-battement, afin d'obtenir la valeur de la liaison K souhaitée par l'inclinaison correspondante de la bielle de liaison.

Du fait de la distance entre l'articulation de la bielle de liaison sur le levier de pas et l'axe de battement, cette inclinaison varie avec le battement cyclique, ce qui induit une liaison pas-battement qui dépend du battement cyclique. Toutefois, comme cette variation d'inclinaison est de signe opposé et d'amplitude sensiblement égale pour deux pales diamétralement opposées, par exemple dans un rotor quadripale, il en résulte une liaison pas-battement pour le mode cyclique qui est sensiblement constante, lorsqu'elle est rapportée au moyeu basculant et à l'ensemble du rotor. Concrètement, une perturbation en battement cyclique pour un rotor sollicité par un battement cyclique important provoque une variation de pas différente pour deux pales opposées, mais la considération globale de la variation de moment aérodynamique appliqué au centre de la tête de rotor montre que ce moment reste très sensiblement proportionnel à la perturbation en battement cyclique, et indépendant du battement cyclique.

L'agencement de ce dispositif de commande de pas avec, pour chaque pale, une bielle de liaison sensiblement dans le plan radial par rapport à l'axe du mât, est plus particulièrement adapté à un rotor rigide en traînée, pour lequel le mouvement de traînée des pales est très faible, ce qui limite les variations de pas induites par le couplage pas-traînée. Une optimisation de la limitation des variations de pas induites par ce couplage pas-traînée peut être obtenue en disposant l'extrémité de la bielle de liaison articulée sur le levier de pas correspondant dans le plan perpendiculaire à l'axe d'articulation de pas et contenant le noeud de vibrations du mode de traînée cyclique.

De plus, la disposition de la bielle de liaison, en saillie du côté du bord d'attaque ou du bord de fuite de la pale correspondante, à partir du levier de pas de cette pale, peut être choisie en fonction du signe souhaité du couplage ou de la liaison pas-traînée pour les modes de traînée cyclique et collectif.

Avantageusement de plus, pour éviter autant que possible les couplages parasites, les axes de pivot du renvoi respectivement sur l'entraîneur, sur la bielle de commande de pas, et sur la bielle de liaison sont sensiblement parallèles entre eux, ainsi qu'à l'axe de changement de pas de la pale correspondante, en position neutre du moyeu.

D'une manière générale, le renvoi et la bielle de liaison, ainsi de préférence que la biellette de commande de pas, se déplacent sensiblement dans un plan parallèle à l'axe du mât et perpendiculaire à l'axe de pivot du renvoi sur l'entraîneur et sensiblement perpendiculaire à l'axe de changement de pas de la pale correspondante.

Avantageusement de plus, pour conserver une faible liaison K avec une excentricité faible et un nombre de pales quelconque, le levier de pas est en saillie vers la base du mât sur l'extrémité radiale interne, par rapport à l'axe du mât, d'un manchon de pale, rigide en torsion et lié en torsion au pied de la pale correspondante autour de l'axe de changement de pas, et entourant lesdits moyens correspondants de retenue et d'articulation en pas de la pale, de sorte que la commande de pas s'effectue à proximité du moyeu et de l'axe du mât, et que ce dispositif de commande de pas est, par la présence des manchons, directement compatible avec des moyeux de rotor du type à plateau en forme d'étoile comportant autant de bras élancés que le rotor comporte de pales, chaque bras du moyeu supportant les moyens de retenue et d'articulation en pas d'une pale correspondante, ces moyeux étant connus pour procurer une bonne rigidité en traînée tout en présentant une faible rigidité en battement, par la flexion des bras du moyeu perpendiculairement à leur plan.

Afin d'assurer un bon guidage du renvoi dans ses pivotements sur l'entraîneur, et donc aussi un bon guidage correspondant des extrémités de la bielle de commande de pas comme de la bielle de liaison qui sont articulées sur ce renvoi, ce dernier est avantageusement monté pivotant dans une chape en saillie vers l'extérieur sur l'entraîneur. Par contre, la bielle de liaison est avantageusement articulée sur le levier de pas et sur le renvoi par des liaisons rotulées, et/ou le renvoi est articulé à la bielle de commande de pas par une liaison rotulée.

D'autres avantages et caractéristiques de l'invention ressortiront de la description donnée ci-dessous, à titre non limitatif, d'un exemple de réalisation décrit en référence aux dessins annexés sur lesquels :

- la figure 1 est une vue schématique, en élévation latérale, d'un aéronef convertible à rotors basculants destinés à être équipés de dispositifs de commande de pas des pales selon l'invention,
- la figure 2 est une vue en perspective de côté et de dessus de la tête d'un rotor quadripale pour l'aéronef convertible de la figure 1, et équipé d'un dispositif de commande de pas selon l'invention, associé à un moyeu à plateau en étoile à quatre bras et de type « gimbal »,
- la figure 3 est une vue schématique en élévation latérale, selon l'axe de changement de pas d'une pale, de la tête de rotor de la figure 2,
- la figure 4 est un schéma de l'agencement cinématique du dispositif de commande de pas de la tête de rotor des figures 1 et 2, vu dans la même direction que la figure 3, avec indication des paramètres géométriques pris en compte pour calculer la longueur de la bielle de liaison, son inclinaison sur un plan radial par rapport à l'axe du mât et la liaison K correspondante,
- la figure 5 est un schéma illustrant la position, dans le plan défini par les axes du mât rotor et de changement de pas d'une pale, du point d'articulation de la bielle de liaison sur le levier de pas correspondant par rapport à l'axe de battement, et
- les figures 6 et 7 à 9 sont des courbes représentant respectivement la loi cinématique du pas du manchon de pale en fonction de la rotation du renvoi (figure 6), et les évolutions de l'inclinaison de la bielle (figure 7), de la liaison K instantanée (figure 8), et de la liaison K cyclique (figure 9), pour différentes valeurs de battement cyclique en fonction du pas collectif d'un manchon de pale, pour un rotor quadripale.

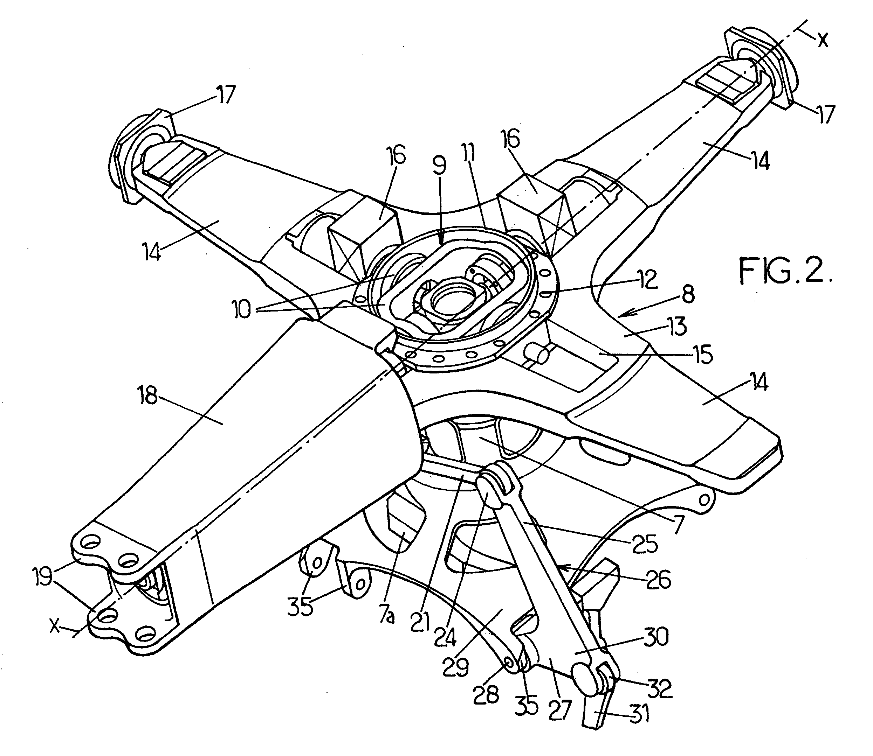

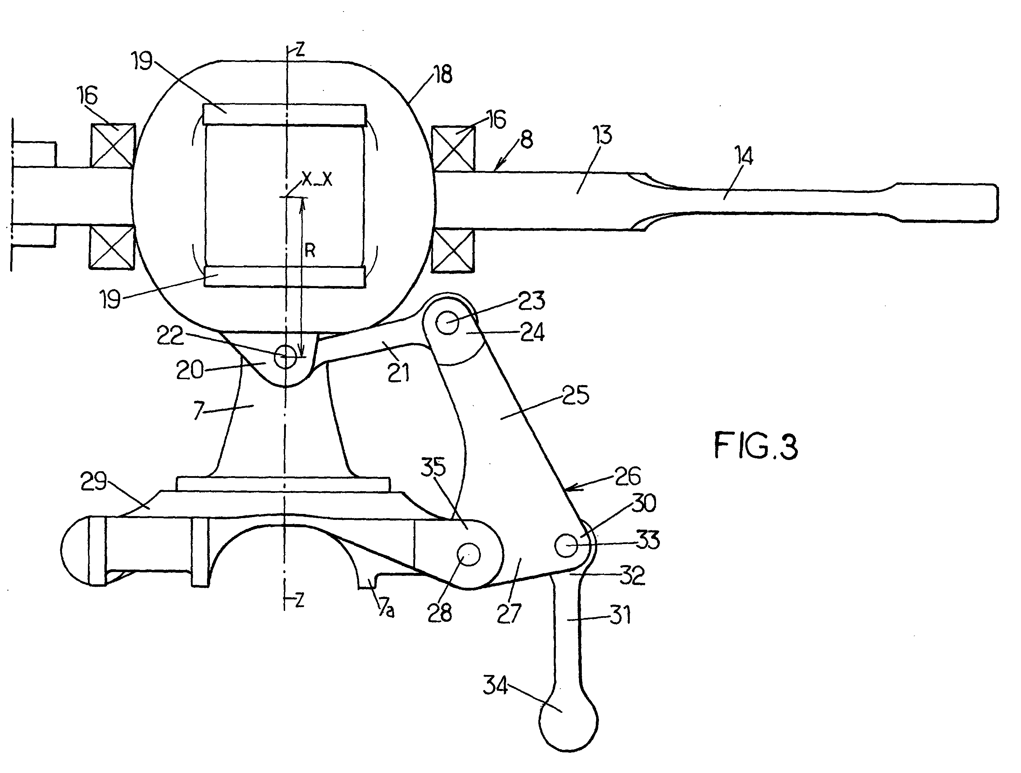

La tête de rotor quadripale des figures 2 et 3, pour l'équipement d'un rotor 4 basculant d'un aéronef convertible selon la figure 1, comprend un mât rotor 7, entraîné en rotation par sa base 7a autour de son axe longitudinal Z-Z, et dont l'extrémité axiale opposée à la base 7a est reliée à un moyeu 8 par un dispositif 9 d'entraînement homocinétique et de basculement d'ensemble autour de tout axe de battement coupant l'axe Z-Z et perpendiculaire à ce dernier, et pouvant être orienté selon un azimut quelconque autour de l'axe Z-Z, ce dispositif 9 d'entraînement homocinétique et de basculement étant, par exemple, un dispositif à double balancier tel que décrit dans FR 02 03464, logé dans un carter de moyeu 11 fixé par une couronne de vis axiales 12 sur un plateau de moyeu 13.

On rappelle simplement que le dispositif 10 à double balancier comprend deux balanciers montés chacun pivotant autour de l'un respectivement de deux bras d'entraînement diamétraux du mât 7, perpendiculaires l'un à l'autre et à l'axe Z-Z, et dont chacun entraîne le balancier correspondant en rotation autour de cet axe Z-Z, chacun des balanciers étant de plus articulé sur le carter de moyeu 11 par deux liaisons rotulées diamétralement opposées par rapport à l'axe Z-Z et centrées sensiblement dans un plan passant par l'axe Z-Z et par l'axe diamétral autour duquel l'autre balancier est monté pivotant.

Le dispositif combiné 9 de basculement et entraînement homocinétique permet ainsi l'entraînement en rotation du moyeu 8 par le mât 7 autour d'un axe géométrique de rotation du moyeu 8 qui reste perpendiculaire au plan de ce moyeu et peut donc s'incliner, avec ce dernier, dans toute direction autour de l'axe Z-Z.

Lé plateau de moyeu 13 est un plateau en étoile comportant autant de bras élancés 14 que le rotor comporte de pales, à savoir quatre dans cet exemple, chacun des bras 14 supportant des moyens de retenue et d'articulation d'une pale en pas autour de l'axe longitudinal X-X de changement de pas de cette pale, cet axe X-X s'étendant dans le plan de rotation du rotor, défini sensiblement par les axes X-X de changement de pas de toutes les pales, lesquels axes X-X se coupent sensiblement sur l'axe de rotation Z-Z et sont sensiblement perpendiculaires à ce dernier, lorsque le rotor est au repos ou en position neutre, le plan de rotation du rotor étant alors sensiblement perpendiculaire à l'axe Z-Z du mât 7.

Le plateau de moyeu 13 présente une ouverture centrale, coaxiale à l'axe Z-Z, pour le passage du mât 7, ainsi que, dans chacun de ses bras 14, une alvéole 15, ménagée dans la partie du bras 14 qui est adjacente à la partie centrale du plateau de moyeu 13, et dans laquelle est logée une partie 16 des moyens de retenue et d'articulation de la pale correspondante, dont une autre partie 17 est fixée sur l'extrémité externe du bras 14 correspondant. Ces moyens de retenue et d'articulation en pas 16 et 17 sont entourés par un manchon 18 auquel ces moyens 16 et 17 sont reliés de sorte à permettre l'articulation du manchon 18 par pivotement d'ensemble autour de l'axe de changement de pas X-X correspondant, car ce manchon 18 est rigide en torsion et solidaire en torsion du pied d'une pale correspondante, par une chape radiale externe 19, et deux broches de pale (non représentées) retenant le pied de pale (également non représenté) dans la chape 19 du manchon 18 correspondant.

Le manchon 18 est ainsi solidaire en torsion d'une pale correspondante autour de l'axe X-X de changement de pas de cette pale, grâce aux moyens de retenue et d'articulation en pas 16 et 17, qui retiennent la pale et son manchon 18 sur un bras 14 du plateau de moyeu 13, réalisé par exemple en matériau composite, et présentant une grande rigidité en traînée, et simultanément une bonne flexibilité en battement au niveau de chacun de ses bras 14.

Le dispositif de commande du pas de chaque pale est un dispositif externe au moyeu 8, tournant avec le mât 7, et qui permet de commander le pas du manchon de pale 18, du fait de la rigidité en torsion de ce manchon 18 et de sa solidarisation en torsion au pied de la pale correspondante, cette commande de pas s'effectuant, sur le manchon 18, au niveau d'un levier de pas 20 qui est en saillie sous l'extrémité radiale interne (par rapport à l'axe Z-Z) du manchon 18, ce levier de pas 20 étant orienté selon l'axe Z-Z et vers la base 7a du mât 7, c'est-à-dire du côté du plan de rotation du moyeu 8 qui est situé vers la base du mât 7, comme clairement représenté sur la figure 3.

Le dispositif de commande de pas comprend une bielle de liaison 21, qui est articulée à pivotement par une extrémité sur le levier de pas 20, autour d'un axe 22 sensiblement parallèle à l'axe de changement de pas X-X du manchon 18, de préférence par un embout rotulé de la bielle 21, permettant un léger débattement de cette bielle 21 par rapport au levier 20 en dehors du plan perpendiculaire à l'axe de changement de pas X-X et contenant le levier 20. Par son autre extrémité, la bielle de liaison 21 est également articulée à pivotement, autour d'un axe 23, sensiblement parallèle aux axes 22 et X-X, sur l'extrémité supérieure 24 (sur les figures 2 et 3) d'un bras 25 d'un renvoi 26 sensiblement en forme de L, ou plus globalement de forme générale triangulaire, et qui est articulé à pivotement par l'extrémité de son autre bras 27, et autour d'un axe 28 également sensiblement parallèle aux axes X-X, 22 et 23, sur un entraîneur 29 fixé au mât 7 au-dessus de sa base 7a et solidaire en rotation du mât 7 autour de l'axe Z-Z.

De plus, le renvoi 26 est également articulé à pivotement, au niveau de son coude 30, sur l'extrémité supérieure 32 d'une bielle de commande de pas 31, autour d'un axe de pivot 33 qui est également sensiblement parallèle aux axes X-X, 22, 23 et 28.

Par son extrémité inférieure 34, la bielle de commande de pas 31 est reliée, de manière bien connue dans les dispositifs à plateaux cycliques pour la commande du pas des pales de rotors principaux d'hélicoptère, à un plateau cyclique tournant d'un tel dispositif, qui peut être réalisé selon différentes configurations connues, par exemple à cardan, à rotule, ... Par ce dispositif connu à plateaux cycliques, la bielle de commande de pas 31 est déplacée sensiblement dans la direction de l'axe Z-Z de rotation du mât 7, et l'articulation de son extrémité supérieure 32 autour de l'axe 33 sur le coude 30 du renvoi 26, ainsi que l'articulation de la bielle de liaison 21 autour de l'axe 23 sur l'extrémité supérieure 24 du bras 25 du renvoi 26 sont également assurées par des liaisons rotulées, à l'aide d'embouts à rotule, comme expliqué ci-dessus pour l'articulation de la bielle de liaison 21 par une liaison rotulée sur le levier de pas 20.

Par contre, le bras 27 du renvoi 26 est monté pivotant autour de l'axe 28 dans une chape 35 dont les deux joues sont en saillie sur un côté de l'entraîneur 29.

Par extrémité "supérieure" de la bielle de commande de pas 31 et du bras 25 du renvoi coudé 26, on entend l'extrémité de cette bielle 31 ou de ce bras 25 qui est la plus proche du moyeu 8 et du plan de rotation du rotor, tandis que l'extrémité inférieure est celle située du côté opposé, dans la direction de l'axe Z-Z.

Comme le manchon 18, et donc aussi son levier de pas 20 et l'axe 22 sont entraînés en battement avec la pale correspondante, ainsi qu'avec le moyeu 8 lorsque le rotor bascule dans son ensemble par rapport à l'axe Z-Z du mât 7, alors que la chape 35 occupe une position fixe sur l'entraîneur 29 tournant avec le mât 7, cette chape 35 guide les pivotements du renvoi 26 autour de l'axe 28 en position fixe sur l'entraîneur 29, et sensiblement contenu dans un plan radial par rapport à l'axe Z-Z, c'est-à-dire un plan perpendiculaire à l'axe Z-Z et passant par l'axe des alésages coaxiaux ménagés dans les joues de la chape 35 pour recevoir l'axe de pivot 28.

L'axe de pivot 28 est donc sensiblement perpendiculaire à l'axe Z-Z et sensiblement parallèle au plan passant par les axes Z-Z et X-X, et les axes 33 et 23 ,de pivotement du renvoi 26 respectivement sur la bielle de commande de pas 31 et sur la bielle de liaison 21 sont chacun sensiblement parallèle à l'axe 28. Il en résulte que le renvoi 26 et la bielle de liaison 21 se déplacent sensiblement dans un plan parallèle à l'axe Z-Z du mât 7 et perpendiculaire à l'axe 28 du pivot du renvoi 26 sur l'entraîneur 29, et sensiblement perpendiculaire à l'axe X-X de changement de pas de la pale correspondante, et ce plan dans lequel se déplacent le renvoi 26 et la bielle de liaison 21 est proche de l'axe Z-Z du mât 7, du fait que le levier de pas 20 est en saillie sous l'extrémité radiale interne (par rapport à l'axe Z-Z) du manchon 18.

De plus, comme l'axe 33 de pivotement du renvoi 26 sur la bielle de commande de pas 31 est décalé radialement vers l'extérieur de l'axe de pivot 28 par rapport au plan passant par les axes X-X et Z-Z, et par rapport à cet axe Z-Z, et comme de plus le point fixe à l'extrémité supérieure 24 du bras 25 du renvoi 26 sur lequel la bielle de liaison 21 s'articule à pivotement par l'axe 23 est un point situé entre l'axe 28 d'articulation du renvoi 26 sur l'entraîneur 29, d'une part, et, d'autre part, le plan de rotation du rotor défini par le plan des bras 14 du plateau de moyeu 13 en étoile, le déplacement de la bielle de commande de pas 31 dans une direction sensiblement parallèle à l'axe Z-Z de rotation du mât 7 est converti par le renvoi 26 en un déplacement de la bielle de liaison 21 dans une direction qui est sensiblement transversale à la direction de l'axe Z-Z du mât 7. De plus, la géométrie du renvoi 26 et ses dimensions, ainsi que celles de la bielle de liaison 21 sont choisies de sorte que cette bielle 21 est faiblement inclinée sur tout plan radial, perpendiculaire à l'axe Z-Z du mât 7.

Cette position de la bielle de liaison 21 est favorable non seulement au plan de l'encombrement, mais surtout parce que la pente de cette bielle 21, relativement à tout plan radial perpendiculaire à l'axe Z-Z, ou son angle d'inclinaison sur tout plan radial, correspond à la liaison pas-battement, dite liaison K, souhaitée. On rappelle que la liaison K, qui définit le couplage pas-battement, correspond au rapport d'une variation de l'angle de pas de la pale à la variation de l'angle de battement, qui est à l'origine de la variation de l'angle de pas. Le fait que la valeur de la liaison pas-battement souhaitée soit obtenue grâce à l'inclinaison de la bielle de liaison 21 sur tout plan radial perpendiculaire à l'axe Z-Z, est un avantage essentiel, car, en phase de mise au point du dispositif de commande de pas, le changement de la géométrie et/ou des dimensions et/ou de la position d'au moins un des axes d'articulation du renvoi 26 et de la bielle de liaison 21 permet de tester facilement différentes configurations auxquelles il correspond différentes inclinaisons faibles de la bielle de liaison 21, et donc différentes valeurs de la liaison K.

En particulier, il peut être fait en sorte que la bielle de liaison 21 reste sensiblement parallèle à ou faiblement inclinée sur tout plan radial par rapport à l'axe Z-Z, lorsque la pale correspondante effectue des débattements angulaires dans sa plage de pas (collectif et cyclique).

Comme la bielle de liaison 21 est orientée transversalement à la direction de l'axe Z-Z, dans un plan parallèle à ce dernier et sensiblement perpendiculaire à l'axe de changement de pas X-X de la pale correspondante, le battement cyclique fait varier l'inclinaison de cette bielle 21, ce qui induit une liaison pas-battement qui dépend du battement cyclique. Mais, comme cette variation d'inclinaison est de signe opposé et d'amplitude sensiblement égale pour deux pales diamétralement opposées du rotor, il en résulte une liaison pas-battement sensiblement constante pour le mode cyclique, au niveau du moyeu basculant 8. En réalité, des variations de pas différentes sont provoquées sur deux pales diamétralement opposées par une perturbation en battement cyclique, lorsque le rotor est sollicité par un battement cyclique important. Cependant, la variation du moment aérodynamique appliqué au centre de la tête de rotor, considérée globalement, est telle que ce moment reste très sensiblement proportionnel à la perturbation en battement cyclique, et indépendant du battement cyclique lui-même.

Le dispositif de commande de pas avec renvoi 26 et bielle de liaison 21, tel que décrit ci-dessus, est plus particulièrement adapté à un rotor rigide en traînée, pour lequel le mouvement de traînée des pales est très faible, ce qui a pour avantage de limiter les variations de pas induites par le couplage pas-traînée.

En variante, afin de bénéficier au maximum de cet avantage, l'axe 22 d'articulation d'une extrémité de la bielle de liaison 21 sur le levier de pas 20 du manchon 18 de la pale considérée peut être placé dans un plan perpendiculaire à l'axe X-X et contenant le noeud de vibrations du mode de traînée cyclique de cette pale. De plus, la bielle de liaison 21 peut s'étendre du côté du bord de fuite de la pale (comme sur la figure 3), ou du côté du bord d'attaque, selon que l'on souhaité une liaison pas-traînée négative ou positive.

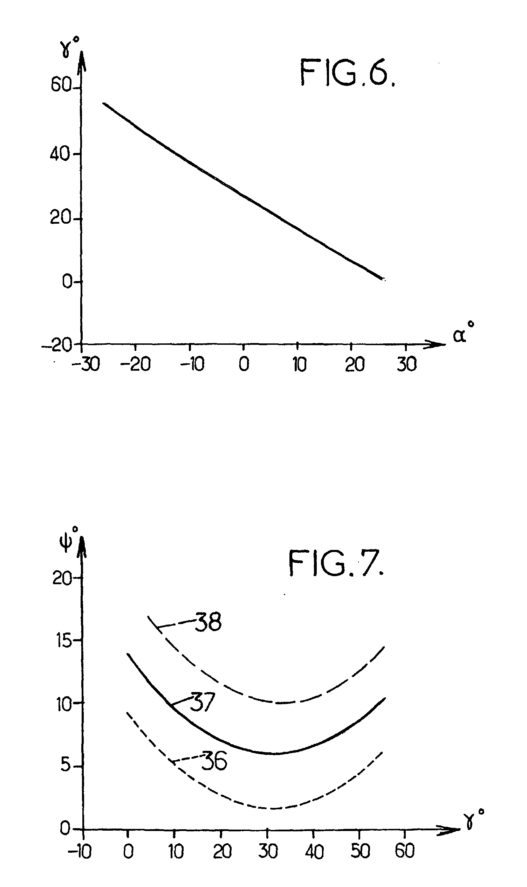

La figure 4 représente schématiquement l'agencement cinématique du dispositif de commande de pas des figures 2 et 3, et sur laquelle a représente la distance de l'axe d'articulation 28 (du renvoi 26 sur l'entraîneur 29) à l'axe Z-Z du mât rotor, b représente la distance, projetée selon l'axe Z-Z, de l'axe d'articulation 28 (du renvoi 26 sur l'entraîneur 29) au plan du moyeu 8, I est la longueur du renvoi 26 mesurée entre les axes 28 et 23 de pivot du renvoi 26 respectivement sur l'entraîneur 29 et sur la bielle 21, R est le rayon d'attache de la bielle de liaison 21 sur le levier de pas 20 du manchon 18, par rapport à l'axe de changement de pas X-X, c'est-à-dire la distance entre les axes 22 et X-X, $\gamma 0$ désigne un pré-calage angulaire du manchon 18, dont l'angle de rotation par rapport au plan passant par les axes Z-Z et X-X est désigné $\gamma$ (avec une valeur initiale nulle), $\alpha 0$ représente le pré-calage angulaire du renvoi 26, avec $\alpha$ désignant l'angle de rotation du renvoi 26, c'est-à-dire l'angle d'inclinaison du segment reliant les axes 28 et 23 du renvoi 26 sur tout plan parallèle au plan défini par les axes Z-Z et X-X (avec une valeur initiale nulle de $\alpha$), de sorte que la longueur L de la bielle de liaison 21 est donnée par la formule simplifiée (1) suivante :

$$(1)$$

$$L = \sqrt{\left(a + 1.\sin(\alpha + \alpha 0) + R.\sin(\gamma + \gamma 0)\right)^2 + \left(1.\cos(\alpha + \alpha 0) - b + R.\cos(\gamma + \gamma 0)\right)^2}$$

Si, de plus, comme représenté sur la figure 5, $\beta$ est l'angle de battement de la pale correspondante ($\beta$ étant alors l'angle entre l'axe X-X, incliné sur l'axe Z-Z, et la projection sur H-H de l'axe X-X, perpendiculairement à l'axe Z-Z), et si D est la distance entre le centre de l'articulation de la bielle de liaison 21 sur le levier de pas 20 (c'est-à-dire le centre de la rotule retenue sur l'axe de liaison 22) et le plan parallèle à l'axe Z-Z et contenant l'axe de battement B-B de la pale correspondante, les calculs montrent que l'inclinaison $\psi$ de la bielle 21 sur tout plan radial, perpendiculaire à l'axe Z-Z, et la liaison K (liaison pas-battement) sont exprimées par les formules simplifiées (2) et (3) suivantes :

**(2)**

$$\Psi(\alpha, \beta) := \arcsin\left[\frac{(b + D.\sin(\beta) - 1.\cos(\alpha + \alpha 0) - R.\cos(\gamma(\alpha, \beta) + \gamma 0))}{L}\right]$$

$$(3)$$

$$K\delta(\alpha, \beta) := D.\frac{\sin\psi(\alpha, \beta)}{R.\cos(\gamma(\alpha, \beta) + \gamma 0 - \psi(\alpha, \beta))}$$

La figure 6 représente la courbe de variation du pas $\gamma$ du manchon 18 en fonction de l'angle $\alpha$ de rotation du renvoi 26 comme repéré sur la figure 4. Cette loi cinématique correspond à une décroissance sensiblement linéaire du pas $\gamma$ du manchon 18 lorsque l'angle de rotation $\alpha$ du renvoi 26 augmente.

Il résulte des formules simplifiées (2) et (3) une évolution de l'angle d'inclinaison $\psi$ de la bielle 21, pour différentes valeurs du battement et en fonction du pas collectif du manchon 18, qui correspond aux courbes 36, 37 et 38 sensiblement en U de la figure 7, sur laquelle ces courbes ont été obtenues respectivement avec un battement cyclique de + 11°, 0° et -11°.

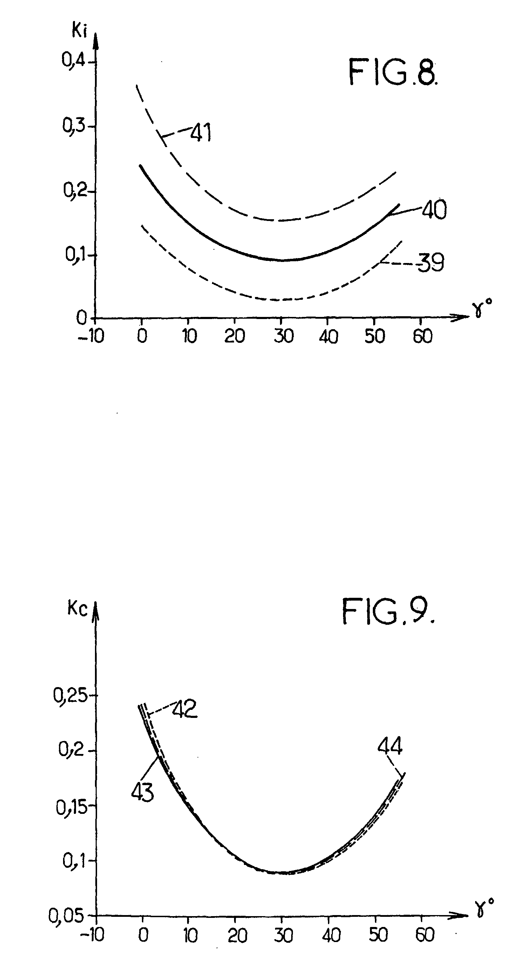

Sur la figure 8, les courbes correspondantes 39, 40 et 41, également sensiblement en U, représentent l'évolution de la liaison K instantanée Ki pour différentes valeurs de battement cyclique (+ 11°, 0°, - 11°) en fonction du pas $\gamma$ du manchon 18. Ces courbes 39, 40 et 41 d'évolution de la liaison K instantanée sont bien distinctes les unes des autres sur la figure 8.

Par contre, si l'on considère l'évolution de la liaison K cyclique Kc, pour différentes valeurs de battement cyclique, par exemple les mêmes de + 11 °, 0° et - 11°, en fonction du pas $\gamma$ du manchon 18, et pour le rotor quadripale des figures 2 et 3, on obtient des courbes 42, 43 et 44 correspondant respectivement aux courbes 39, 40 et 41 de la figure 8, mais qui sont pratiquement confondues les unes avec les autres et avec le même profil en U, sur la figure 9.

Le dispositif de commande de pas des pales de l'invention, qui est bien compatible avec un rotor de type "gimbal", rigide en traînée, et à 4 pales ou plus, s'accommode donc bien du battement cyclique important et de la plage de commande en pas collectif très importante que l'on rencontre sur les rotors basculants des aéronefs convertibles, et présente l'avantage de commander le déplacement du levier de pas 20 de chaque pale autour de l'axe X-X de changement de pas de la pale correspondante à l'aide d'une bielle de liaison 21 faiblement inclinée sur tout plan radial par rapport à l'axe Z-Z du mât rotor, et dont la pente par rapport à ce plan peut être choisie pour correspondre à la liaison K souhaitée pour le rotor, et, en l'occurrence, une liaison K de valeur faiblement négative pour un rotor à excentricité nulle, comme cela est le cas du rotor décrit ci-dessus en référence aux figures 2 et 3, et conformément à l'exigence sur la liaison K pour les rotors basculants des aéronefs convertibles.

**Revendications**

1. Rotor (4) d'aéronef convertible (1), comportant :

   - un mât rotor (7), destiné à être entraîné en rotation par sa base (7a) autour de son axe longitudinal (Z-Z),
   - un moyeu (8), entraîné en rotation par le mât (7), et relié à ce dernier par des moyens (9) de basculement permettant un basculement d'ensemble du moyeu (8) autour de tout axe de battement passant par l'axe (Z-Z) du mât (7), et perpendiculaire à l'axe du mât,
   - au moins deux pales, dont chacune est reliée au moyeu (8) par des moyens (16, 17) de retenue et d'articulation de ladite pale en pas autour de son axe (X-X) longitudinal de changement de pas, qui s'étend dans un plan de rotation du rotor (4), et

   un dispositif de commande de pas externe, au moyeu (8) comprenant pour chaque pale du rotor :

   - un levier de pas (20), solidaire en rotation du pied de ladite pale autour dudit axe (X-X) de changement de pas, et en saillie du côté du plan de rotation du rotor qui est dirigé vers la base (7a) du mât (7),
   - une bielle (31) de commande de pas, déplaçable dans une direction sensiblement parallèle à l'axe (Z-Z) de rotation du mât (7),
   - un renvoi (26), monté pivotant, autour d'un axe de pivot (28) sensiblement contenu dans un plan radial par rapport à l'axe (Z-Z) de rotation du mât (7), sur un point fixe d'un entraîneur (29), solidaire en rotation du mât (7), ladite bielle (31) de commande de pas étant articulée sur ledit renvoi (26), au moins à pivotement autour d'un axe (33) sensiblement parallèle à l'axe de pivot (28) du renvoi (26) sur l'entraîneur (29), et en un point décalé radialement vers l'extérieur dudit axe de pivot (28) par rapport à l'axe (Z-Z) de rotation du mât (7), et
   - une bielle de liaison (21), articulée au moins à pivotement par une extrémité sur ledit levier de pas (20), autour d'un axe (22) sensiblement parallèle audit axe (X-X) de changement de pas, et, par son autre extrémité, sur le renvoi (26), en un point fixe (24) de ce dernier situé entre ledit plan de rotation du rotor et le point (35) d'articulation du renvoi (26) sur l'entraîneur (29), le rotor (4) étant **caractérisé en ce que** ladite bielle de liaison (21) est faiblement inclinée sur tout plan radial par rapport à l'axe (Z-Z) de rotation du mât (7), et que le renvoi (26) convertit tout déplacement de la bielle (31) de commande de pas en déplacement de la bielle de liaison (21) dans une direction sensiblement transversale à la direction de l'axe (Z-Z) du mât (7).

2. Rotor (4) selon la revendication 1, **caractérisé en ce que** ladite bielle de liaison (21) reste sensiblement parallèle à ou faiblement inclinée sur tout plan radial par rapport à l'axe (Z-Z) de rotation du mât (7) lorsque ladite pale effectue des débattements angulaires dans sa plage de pas.

3. Rotor (4) selon la revendication 1, **caractérisé en ce que** l'inclinaison de ladite bielle de liaison (21) sur tout plan radial par rapport à l'axe (Z-Z) du mât (7) correspond à une liaison pas-battement (liaison K) souhaitée pour la pale correspondante.

4. Rotor (4) selon la revendication 1, **caractérisé en ce que** l'angle d'inclinaison de ladite bielle de liaison (21) sur tout plan radial, perpendiculaire à l'axe (Z-Z) du mât (7), varie de sorte à procurer un couplage pas-battement (liaison K) selon une loi déterminée en fonction de l'angle de pas de la pale, lorsque cette dernière effectue des débattements angulaires en battement.

5. Rotor (4) selon l'une quelconque des revendications 1 à 4, **caractérisé en ce que** le renvoi (26) est sensiblement en forme de L, articulé par son coude (30) sur la bielle (31) de commande de pas, par l'extrémité de l'un (27) de ses bras (25, 27) sur l'entraîneur (26), et par l'extrémité de son autre bras (25) sur la bielle de liaison (21).

6. Rotor (4) selon l'une quelconque des revendications 1 à 5, **caractérisé en ce que** les axes de pivot (28, 33, 23) du renvoi (26) respectivement sur l'entraîneur (29), sur la bielle (31) de commande de pas, et sur la bielle (21) de liaison, sont sensiblement parallèles entre eux, ainsi qu'à l'axe de changement de pas (X-X) de la pale correspondante, en position neutre du moyeu (8).

**7.** Rotor (4) selon la revendication 6, **caractérisé en ce que** ledit renvoi (26) et ladite bielle de liaison (21) se déplacent sensiblement dans un plan parallèle à l'axe (Z-Z) du mât (7) et perpendiculaire à l'axe (28) de pivot du renvoi (26) sur l'entraîneur (29) et sensiblement perpendiculaire à l'axe (X-X) de changement de pas de la pale correspondante.

**8.** Rotor (4) selon l'une quelconque des revendications 1 à 7, **caractérisé en ce que** ledit levier de pas (20) est en saillie vers la base (7a) du mât (7) sur l'extrémité radiale interne, par rapport à l'axe (Z-Z) du mât (7), d'un manchon (18) de pale, rigide en torsion et lié en torsion au pied de la pale correspondante autour de l'axe (X-X) de changement de pas, et entourant lesdits moyens (16, 17) de retenue et d'articulation en pas de la pale.

**9.** Rotor (4) selon l'une quelconque des revendications 1 à 8, **caractérisé en ce que** ledit renvoi (26) est monté pivotant dans une chape (35) en saillie vers l'extérieur sur l'entraîneur (29).

**10.** Rotor (4) selon l'une quelconque des revendications 1 à 9, **caractérisé en ce que** ladite bielle de liaison (21) est articulée sur ledit levier de pas (20) et sur ledit renvoi (26) par des liaisons rotulées et/ou ledit renvoi (26) est articulé à ladite bielle de commande de pas (31) par une liaison rotulée.

**11.** Aéronef convertible (1) comprenant au moins un rotor (4) basculant selon l'une quelconque des revendications 1 à 10, destiné à basculer entre une configuration avion, dans laquelle le rotor (4) fonctionne comme une hélice d'avion, et une configuration hélicoptère, dans laquelle le rotor (4) fonctionne comme un rotor principal sustentateur d'hélicoptère.

**Patentansprüche**

**1.** Rotor (4) eines Verwandlungsflugzeugs (1), der aufweist:

- einen Rotormast (7), der dazu bestimmt ist, von seiner Basis (7a) um seine Längsachse (Z-Z) in Drehung versetzt zu werden,

  - eine Nabe (8), die vom Mast (7) in Drehung versetzt wird und mit diesem letzteren über Kippmittel (9) verbunden ist, die ein Kippen der gesamten Nabe (8) um jedes Schlaggelenk ermöglichen, das durch die Achse (Z-Z) des Masts (7) und senkrecht zur Achse des Masts verläuft,
  - mindestens zwei Blätter, von denen jedes mit der Nabe (8) über Halte- und Gelenkmittel (16, 17) zur Verstellung des Blatts um seine Blattverstellungs-Längsachse (X-X) verbunden ist, die sich in einer Drehebene des Rotors (4) erstreckt, und
  - eine Blattverstellsteuerungsvorrichtung außerhalb der Nabe (8), die für jedes Blatt des Rotors aufweist:

    - einen Blattverstellhebel (20), der in Drehung um die Blattverstellungsachse (X-X) fest mit dem Fuß des Blatts verbunden ist und auf der Seite der Drehebene des Rotors vorsteht, die zur Basis (7a) des Masts (7) gerichtet ist,
    - eine Blattverstellsteuerstange (31), die in einer Richtung im wesentlichen parallel zur Drehachse (Z-Z) des Masts (7) verschiebbar ist,
    - ein Vorgelege (26), das um eine Schwenkachse (28), die im wesentlichen in einer radialen Ebene bezüglich der Drehachse (Z-Z) des Masts (7) enthalten ist, an einem festen Punkt eines Mitnehmers (29) schwenkbar montiert ist, der in Drehung fest mit dem Mast (7) verbunden ist, wobei die Blattverstellsteuerstange (31) an das Vorgelege (26) zumindest um eine Achse (33) im wesentlichen parallel zur Schwenkachse (28) des Vorgeleges (26) auf dem Mitnehmer (29) schwenkbar und an einem Punkt angelenkt ist, der bezüglich der Drehachse (Z-Z) des Masts (7) radial nach außerhalb der Schwenkachse (28) verlagert ist, und
    - eine Verbindungsstange (21), die zumindest mit einem Ende am Blattverstellhebel (20) um eine Achse (22) im wesentlichen parallel zur Blattverstellachse (X-X) und mit ihrem anderen Ende am Vorgelege (26) an einem festen Punkt (24) dieses letzteren schwenkbar angelenkt ist, der sich zwischen der Drehebene des Rotors und dem Gelenkpunkt (35) des Vorgeleges (26) am Mitnehmer (29) befindet,

wobei der Rotor (4) **dadurch gekennzeichnet ist, dass** die Verbindungsstange (21) in jeder radialen Ebene bezüglich der Drehachse (Z-Z) des Masts (7) geringfügig geneigt ist, und dass das Vorgelege (26) jede Verschiebung der Blattverstellsteuerstange (31) in eine Verschiebung der Verbindungsstange (21) in eine Richtung im wesentlichen quer zur Richtung der Achse (Z-Z) des Masts (7) umsetzt.

2. Rotor (4) nach Anspruch 1, **dadurch gekennzeichnet, dass** die Verbindungsstange (21) in jeder radialen Ebene bezüglich der Drehachse (Z-Z) des Masts (7) im wesentlichen parallel oder geringfügig geneigt bleibt, wenn das Blatt Ausschläge in seinem Blattverstellbereich ausführt.

3. Rotor (4) nach Anspruch 1, **dadurch gekennzeichnet, dass** die Neigung der Verbindungsstange (21) in jeder radialen Ebene bezüglich der Achse (Z-Z) des Masts (7) einer gewünschten Blattverstellung-Schlag-Verbindung (Rücksteuerung Lambda) für das entsprechende Blatt entspricht.

4. Rotor (4) nach Anspruch 1, **dadurch gekennzeichnet, dass** der Neigungswinkel der Verbindungsstange (21) in jeder radialen Ebene senkrecht zur Achse (Z-Z) des Masts (7) so variiert, dass eine Blattverstellung-Schlag-Kopplung (Rücksteuerung Lambda) gemäß einem bestimmten Gesetz in Abhängigkeit vom Blattverstellwinkel des Blatts erzeugt wird, wenn dieses Blatt Schlag-Ausschläge ausführt.

5. Rotor (4) nach einem der Ansprüche 1 bis 4, **dadurch gekennzeichnet, dass** das Vorgelege (26) im wesentlichen die Form eines L hat, das mit seinem Knick (30) an der Blattverstellsteuerstange (31), mit dem Ende eines (27) seiner Arme (25, 27) am Mitnehmer (29) und mit dem Ende seines anderen Arms (25) an der Verbindungsstange (21) angelenkt ist.

6. Rotor (4) nach einem der Ansprüche 1 bis 5, **dadurch gekennzeichnet, dass** die Schwenkachsen (28, 33, 23) des Vorgeleges (26) am Mitnehmer (29), an der Blattverstellsteuerstange (31), bzw. an der Verbindungsstange (21) in der neutralen Stellung der Nabe (8) im wesentlichen parallel zueinander sowie zur Blattverstellungsachse (X-X) des entsprechenden Blatts sind.

7. Rotor (4) nach Anspruch 6, **dadurch gekennzeichnet, dass** das Vorgelege (26) und die Verbindungsstange (21) sich im wesentlichen in einer Ebene parallel zur Achse (Z-Z) des Masts (7) und senkrecht zur Schwenkachse (28) des Vorgeleges (26) auf dem Mitnehmer (29) und im wesentlichen senkrecht zur Blattverstellachse (X-X) des entsprechenden Blatts bewegen.

8. Rotor (4) nach einem der Ansprüche 1 bis 7, **dadurch gekennzeichnet, dass** der Blattverstellhebel (20) zur Basis (7a) des Masts (7) auf das in Bezug auf die Achse (X-X) des Masts (7) innere radiale Ende einer Blatt-Außenhülse (18) vorsteht, die verdrehungssteif ist und in Verdrehung mit dem Fuß des entsprechenden Blatts um die Blattverstellachse (X-X) verbunden ist und die Halte- und Blattverstell-Gelenkmittel (16, 17) des Blatts umgibt.

9. Rotor (4) nach einem der Ansprüche 1 bis 8, **dadurch gekennzeichnet, dass** das Vorgelege (26) schwenkbar in einem Gabelkopf (35) montiert ist, der auf dem Mitnehmer (29) nach außen vorsteht.

10. Rotor (4) nach einem der Ansprüche 1 bis 9, **dadurch gekennzeichnet, dass** die Verbindungsstange (21) an den Blattverstellhebel (20) und das Vorgelege (26) über Kugelgelenkverbindungen angelenkt und/oder das Vorgelege (26) an die Blattverstellsteuerstange (31) über eine Kugelgelenkverbindung angelenkt ist.

11. Verwandlungsflugzeug (1), das mindestens einen Kipprotor (4) gemäß einem der Ansprüche 1 bis 10 aufweist und dazu bestimmt ist, zwischen einer Flugzeugkonfiguration, in der der Rotor (4) wie ein Flugzeugpropeller arbeitet, und einer Hubschrauberkonfiguration zu schwenken, in der der Rotor (4) wie ein Haupthubrotor eines Hubschraubers arbeitet.

**Claims**

1. A rotor (4) for a convertible aircraft (1), having:

   - a rotor mast (7) intended to be driven in rotation by its base (7a) about its longitudinal axis (Z-Z),
   - a hub (8) driven in rotation by the mast (7) and connected thereto by tilting means (9) which enable the hub (8) to tilt as a whole about any flapping hinge passing through the axis (Z-Z) of the mast (7) and perpendicular to the axis of the mast,
   - at least two blades, each of which is connected to the hub (8) by means (16, 17) of holding and articulating the said blade in its pitch about its longitudinal axis (X-X) for changing pitch, which extends along a plane of rotation of the rotor (4), and

- an external device for controlling pitch on the hub (8), comprising for each blade of the rotor:

  - a pitch lever (20) which rotates in fixed relation to the foot of the said blade about the said axis (X-X) for changing pitch and projects from that side of the plane of rotation of the rotor which is directed towards the base (7a) of the mast (7),
  - a connecting rod (31) for controlling pitch which may be displaced in a direction substantially parallel to the axis (Z-Z) of rotation of the mast (7),
  - a transmission (26) mounted to pivot about a pivot axis (28) which is substantially contained within a radial plane with respect to the axis (Z-Z) of rotation of the mast (7) on a fixed point of a carrier (29) which rotates in fixed relation to the mast (7), the said connecting rod (31) for controlling pitch being articulated on the said transmission (26), at least such that it can pivot about an axis (33) substantially parallel to the pivot axis (28) of the transmission (26) on the carrier (29), and located at a point offset radially outwards from the said pivot axis (28) in relation to the axis (Z-Z) of rotation of the mast (7), and
  - a connecting rod (21) articulated at least such that it can pivot by means of one end on the said pitch lever (20) about an axis (22) substantially parallel to the said axis (X-X) for changing pitch and, by means of its other end, on the transmission (26) at a point (24) fixed on the latter and located between the said plane of rotation of the rotor and the point (35) at which the transmission (26) is articulated on the carrier (29), the rotor (4) being **characterised in that** the said connecting rod (21) is slightly inclined in any radial plane with respect to the axis (Z-Z) of rotation of the mast (7), and **in that** the transmission (26) converts any displacement of the connecting rod (31) for controlling pitch into a displacement of the connecting rod (21) in a direction which is substantially transverse with respect to the direction of the axis (Z-Z) of the mast (7).

2. A rotor (4) according to Claim 1, **characterised in that** the said connecting rod (21) remains substantially parallel to or slightly inclined in any radial plane with respect to the axis (Z-Z) of rotation of the mast (7) when the said blade performs angular movements over its pitch range.

3. A rotor (4) according to Claim 1, **characterised in that** the inclination of the said connecting rod (21) in any radial plane with respect to the axis (Z-Z) of the mast (7) corresponds to a desired coupling between pitch and movement ($\delta 3$ coupling) for the corresponding blade.

4. A rotor (4) according to Claim 1, **characterised in that** the angle of inclination of the said connecting rod (21) in any radial plane perpendicular to the axis (Z-Z) of the mast (7) varies such that a coupling is produced between pitch and movement ($\delta 3$ coupling) in accordance with a principle determined as a function of the angle of pitch of the blade when the latter performs flapping angle movements.

5. A rotor (4) according to any one of Claims 1 to 4, **characterised in that** the transmission (26) is substantially L-shaped and is articulated at its elbow (30) to the connecting rod (31) for controlling pitch, at the end of one (27) of its arms (25, 27) to the carrier (26) and at the end of its other arm (25) to the connecting rod (21).

6. A rotor (4) according to any one of Claims 1 to 5, **characterised in that** the pivot axes (28, 33, 23) of the transmission (26) on the carrier (29), the connecting rod (31) for controlling pitch and the connecting rod (21) respectively are substantially parallel to one another and to the axis (X-X) for changing pitch of the corresponding blade in the neutral position of the hub (8).

7. A rotor (4) according to Claim 6, **characterised in that** the said transmission (26) and the said connecting rod (21) are displaced substantially in a plane parallel to the axis (Z-Z) of the mast (7) and perpendicular to the pivot axis (28) of the transmission (26) on the carrier (29) and substantially perpendicular to the axis (X-X) for changing pitch of the corresponding blade.

8. A rotor (4) according to any one of Claims 1 to 7, **characterised in that** the said pitch lever (20) projects towards the base (7a) of the mast (7) from the inner radial end, in relation to the axis (Z-Z) of the mast (7), of a blade casing (18) which is torsionally rigid and torsionally fixed to the foot of the corresponding blade about the axis (X-X) for changing pitch, surrounding the said means (16, 17) of holding and articulating the blade in its pitch.

9. A rotor (4) according to any one of Claims 1 to 8, **characterised in that** the said transmission (26) is mounted to pivot in a cap (35) projecting outwards from the carrier (29).

10. A rotor (4) according to any one of Claims 1 to 9, **characterised in that** the said connecting rod (21) is articulated to the said pitch lever (20) and the said transmission (26) by ball joints and/or the said transmission (26) is articulated to the said connecting rod (31) for controlling pitch by a ball joint.

11. A convertible aircraft (1) comprising at least one tilting rotor (4) according to any one of Claims 1 to 10, intended to switch between an aeroplane configuration in which the rotor (4) operates in the manner of a propeller of an aeroplane and a helicopter configuration in which the rotor (4) operates in the manner of a principal rotor supporting a helicopter.

FIG.1.

FIG.4.

FIG.5.

FIG.2.

FIG.3

FIG.6.

FIG.7.

FIG.8.

FIG.9.